# EUROPEAN PATENT APPLICATION

(11) **EP 4 465 001 A1**
(43) Date of publication of application: **20.11.2024**
(21) Application number: 23173443.5
(22) Date of filing: 15.05.2023
(51) Int. Cl.: G01L 1/14, G01L 1/20

(54) **PRESSURE DISTRIBUTION SENSING DEVICE**

(71) Applicant: Nederlandse Organisatie voor toegepast-natuurwetenschappelijk Onderzoek TNO, 2595 DA 's-Gravenhage (NL)
(72) Inventor: BURGHOORN, Maria Mathea Antonetta, 2595 DA 's-Gravenhage (NL); SMITS, Edsger Constant Pieter, 2595 DA 's-Gravenhage (NL); RAITERI, Daniele, 2595 DA 's-Gravenhage (NL); ZALAR, Peter, 2595 DA 's-Gravenhage (NL)
(74) Representative: V.O.

(57) **Abstract**

The present disclosure relates to devices for measuring a pressure distribution, also referred to as a pressure mapping device or pressure sensor mat, and to a method of manufacturing. The device comprises: a first and a second flexible substrate (10,20), a spacer structure (30) extending between the substrates and a plurality of force-sensitive sensor nodes. Each sensor node (40) comprises a first conductive element (41) attached to first substrate and a second conductive element (42) attached to the second substrate facing the first conductive element, the first conductive element being movable in use in relation to the second conductive element to vary the resistance of the force-sensitive sensor node. The spacer structure (30) comprises a plurality of isolated spacer elements (31) distributed between adjacent sensor nodes, and wherein spacings between adjacent ones of the spacer elements provide an interconnected network of gas passages between the sensor nodes.

## Description

### TECHNICAL FIELD AND BACKGROUND

The present disclosure relates to a flexible pressure sensor device and method of manufacturing the same. Specifically to devices for measuring a pressure distribution, also referred to as a pressure mapping device or pressure sensor mat.

Pressure distribution sensing devices are known.

CN113720501A discloses a flexible pressure sensor wherein a porous interface of insulating fibers is provided between an array readout circuit and a piezo resistive force sensitive layer.

CN 112067177A relates to a piezoresistive pressure sensing array. The sensor measures a resistance across a deformable micropatterned relief between opposing electrodes. A patterned block is provided to limit deformation of the relief to improve service life of the sensor.

EP3171146A1 discloses a flexible pressure sensor array, wherein each sensor comprises a (circular) cavity bound by a chamber wall.

In scientific literature textile-based pressure sensing arrays are reported. H. Mei et al, show A flexible pressure-sensitive array based on soft substrate (Sensors and Actuators A 222 (2015) 80-86) having an insulating (textile) layer that formed (laser cut) with a hole at each sensor node and glued in between electrode layers.

While the reported solutions can offer some advantages there remains a desire for one or more of improved sensor performance, reduced hysteresis, and relaxed manufacturing, especially large scale manufacturing.

### SUMMARY

Aspects of the present disclosure relate to a pressure sensor device. Specifically the device can be used to advantage for mapping a pressure distribution. For example, a pressure mapping device, e.g. a sensor mat.

The device comprises: a first substrate, a second substrate, and a spacer structure. The sensor nodes comprise a first conductive element that is attached to first substrate and a second conductive element that is attached to the second substrate at a position facing the first conductive element. The first and the conductive element are movable in use in relation to each other to vary a resistance of the force-sensitive sensor node. The spacer structure separates the first and the second substrate in absence of an external contact pressure. The spacer structure comprises a plurality of spacer elements that are distributed between adjacent sensor nodes, wherein spacings between adjacent ones of the spacer elements provide an interconnected network of gas passages between the sensor nodes. The spacer elements are preferably isolated or laterally separated spacer elements, i.e. elements that are not directly interconnected.

The substrate can be a flexible foil. e.g. a plastic foil or a multilayer foil/laminate. The spacer structure extends between the first and the second substrate. The device further comprises a plurality of force-sensitive sensor nodes.

Typically at least one of the substrates is a flexible substrate, e.g. formed of an elastomeric composition. In case both substrates are flexible the device as a whole can be flexible, e.g. bendable.

To enable reliable repeatable activation of the sensor nodes the system preferably includes stretchability. Accordingly, at least one of the foils can be stretchable so that they can move towards each other upon pressure application. Alternatively or in addition the pillars can be flexible and/or stretchable.

The substrates are preferably airtight under normal operating conditions. Airtightness (on a scale of measurement) can be especially relevant for stretchable substrates, as it was found that this can ease coming back of the foils a to non-contact position after pressure release. The sensor nodes can be distributed according to any predefined pattern as known in the field, e.g. a regular (m x n) matrix, to tailor the device for measuring pressure distribution.

The spacer and the substrates can be understood as defining an interconnected structure of fluidly connected gas pockets. Because the spacer structure is comprised of a plurality of individual spacer elements that are separated from each other by a non-zero distance the spacer can be understood as being a porous spacer allowing distribution of gas, across the plurality of sensor nodes. Distribution of gas, e.g. upon pressing one or a subset, advantageously enables pressure distribution within the device. Inventors found that, the spacer can advantageously provide a negligible or controlled flow resistance, e.g. depending on a size of the spacer elements, a separation between the elements, and/or fill factor of the spacer elements.

As opposed to fibrous mats (e.g. laser cut textile layers) the present spacer configuration mitigates or eliminates issues with aligning the spacer to the sensor nodes, thus improving manufacturability, especially for large area sensor mat. Alternatively, or in addition, the present spacer configuration can improve sensor stability during use by mitigating or even eliminating a lateral shift opposing conductive sensing element, e.g. during flexing of the mat.

Further, inventors found that the advantageous gas distribution as provided herein can improve device performance and/or sensing repeatability, accuracy, and/or reduced hysteresis, or false readings. Inventors find that the improved performance can relate to mitigating or even essentially eliminating a build-up of pressure at the sensor nodes during use.

The sensing principle can be as known in the field. For example, sensor nodes can be capacitive or force-sensitive resistor based. Force-sensitive resistor based sensor nodes can be of the so-called through or shunting type.

In a preferred embodiment, the spacer element is an upstanding pillar. An upstanding pillar can be understood as an element that extends from a substrate (between two substrates), at an about right angle, e.g. 90° ± 10°, 90°±5°, or even an essentially right angle. This is in contrast with a spacer, e.g. textile, having randomly distributed fibers. Further the pillar, but not need to, comprise an essentially uniform cross-section over at least portion, e.g. a majority, of its length. The cross-section can be square or rectangular (as illustrated). Of course other cross sections, such as circular, are also envisioned.

The pillar can be a free standing pillar, that is without direct contact with adjacent pillars. Upstanding pillars can advantageously be provided using additive manufacturing methods. For example, pillars can be provided by screen printing an appropriate composition onto one or both of the substrates. Advantageously the pillar can be flexible, e.g. composing or essentially formed of an elastomeric composition. As mentioned some or all of the spacer elements (e.g. pillars) may be substantially rigid, particular if one or more of substrates is flexible and stretchable.

The pillar can extend from one of the first and the second substrate towards the other of the first and the second electrometric substrate. For example, the pillars can connect opposing elastomeric substrates providing an air filled spacing therebetween. For example, the spacer (e.g. pillar) can directly interconnect the opposing substrates.

In another or further preferred embodiment, an adhesive layer is provided between one of the substrates and the spacer element. The adhesive can fix a relative (lateral) position of the substrates, mitigating detrimental effects on sensors node performance due to lateral shift between the substrates during use. Advantageously, the adhesive can be restricted to an endface of the isolated spacer elements. The adhesive can be provided to an endface of all isolated spacer elements, e.g. pillars. Depending on the application the adhesive can be applied to a subset of the spacer, elements, e.g. a subset of pillars that are in closest proximity around a perimeter of each of the sensor nodes.

In some embodiments, the plurality of spacer elements, e.g. the plurality of upstanding pillars, comprises subsets of different types of spacer elements (e.g. pillars). For example, in some embodiments, the isolated spacer elements comprise at least a first subset of upstanding pillars of a first type and a second subset op upstanding pillars of a second type, having a different design/anode or structural quality than the first. In a preferred embodiment, the first pillars as distributed in a first zone surrounding a perimeter of the sensor node, whereas the subset of second upstanding pillars, different from the first, distributed in a second zone comparatively more remote from the sensor node. Preferably, the second zone covers areas of the substrates the between the first zones. The pillar types can be of mutually different geometry, including but not limited to: height, lateral dimension, and shape (e.g. cross-section). Alternatively, or in addition, the pillars can formed of the same or different composition as the second pillars, e.g. a thermoplastic elastomer. By varying the pillar type and/or fill factor the sensor device can be tailored to specific needs/applications. Advantageously the tailoring the pillars qualities can change performance or device operation at various zones of the sensing device. For example, type, dimension and/or fill factor can be used to adjust a local or overall air volume within the system.

In a preferred embodiment, the pressure sensor device can have a comparatively higher structural rigidity at areas corresponding to the second zone than at areas the correspond to the first zone, e.g. by providing pillars having larger cross section area, by providing pillars of a composition having a comparatively higher stiffness, and/or by having a local higher areal coverage (fill factor). Having comparatively higher structural rigidity at zones between sensor nodes advantageously enables incorporation of further electronic components, e.g. temperature sensors or fragile elements, while mitigating exposing such elements to potential undesired contact pressure during operation, while maintaining an overall flexibility and/or stretchability of the pressure sensor device as a whole. For example, both SMD components and other printed functionalities can be realized.

Accordingly, in some variations there can be provided a device comprising one or more further sensor nodes that are disposed in the second zone.

Alternatively, or in addition, the spacer elements surrounding the sensor nodes can have different qualities for specific individual sensor nodes or subsets within the plurality of sensor nodes. For example, a height of the pillars can differ between around sensor nodes to tune an offset.

It will be appreciated that a height of the spacer elements, at least those directly surrounding the sensor node, is preferably more than a combined thickness of: the first conductive element; the second conductive element; and the adhesive layer if provided to ensure an approximate spacing between the second conductive elements at rest.

Further, it will be appreciated that the spacer elements can preferably be distributed to mitigate anisotropy in flow resistance between the substrate layers, for example, by providing a uniform fill factor throughout the device, a uniform lateral distribution, spacing, and/or height.

Further, it will be appreciated that the first and the second substrate can be connected around a perimeter of the spacer structure thereby sealing the interconnected network of gas passages from ambient. Sealing internal network of gas passages from a direct exchange with ambient can prevent ingress of contaminants and/or mitigate variations in device performance due to changes in ambient such as air pressure and/or temperature variations. Furthermore, it was found that hysteresis time will become shorter after pressure release, since air captured in the mat will flow back to the region that had been pressed upon release. If air has to come back from the environment (e.g. via pores), this relaxation process can be severely hampered.

According to a further aspect there is provided a method of manufacturing a pressure sensor device, e.g. the pressure mapping device as disclosed herein. The method comprises: i) providing a first substrate; ii) providing a second substrate; iii) providing a plurality of force-sensitive sensor nodes, each sensor node comprising a first conductive element attached to first substrate and a second conductive element attached to the second substrate facing the first conductive element, the first conductive element being movable in use in relation to the second conductive element to vary the resistance of the force-sensitive sensor node; and iv) providing a spacer structure extending between the first and the second substrate, wherein the spacer structure comprises a plurality of isolated spacer elements distributed between adjacent sensor nodes, and wherein spacings between adjacent ones of the spacer elements provide an interconnected network of cavities for air passage between the sensor nodes.

Advantageously more or more of i) through iv) can be provided by common additive manufacturing methods, including known printing methods such as screen printing. Further, the method can advantageously be fully compatible with large scale production method including but not limited to (semi)continuous roll-to-roll processing.

In some embodiments, the step of providing the spacer structure comprises printing, preferably screen-printing.

Alternatively, or in addition, the step of providing the plurality of force-sensitive sensor nodes can comprise printing. For example, printing the first and the second conductive element onto the respective substrate prior providing the spacer structure.

Advantageously, the method can further comprise a step of overprinting v) an adhesive layer onto the spacer structure. Advantageously the adhesive layer can be provided specifically only to endfaces of the isolated spacer elements (e.g. pillars) or to a subset thereof. Restricting the adhesion to the spacer elements (at least during manufacturing) can advantageously mitigate adverse impact on internal air flow due to excess glue, e.g. as opposed to providing a continuous glue layer.

In some preferred embodiments, the process of providing the spacer structure comprises substeps of: iiia) printing a set of first of pillar elements distributed in a first zone surrounding a perimeter of the sensor node, and iiib) printing a set of second pillar elements, different from the first, distributed in a second zone adjacent the first zone.

To seal the internal structure of the device from direct contact with ambient the method according can further comprise interconnecting the first and the second substrate around a perimeter of the spacer structure thereby sealing the interconnected network of gas passages from ambient.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1 provides partial cross-section side view of a flexible pressure sensor device;
FIG 2 provides partial cross-section side view of a flexible pressure sensor device;
FIGs 3A and 3B detail aspects of spacer configurations;
FIGs 4A and 4B detail aspects of further spacer configurations;
FIGs 5 provides a partial plan view of a flexible pressure sensor device;
FIG 6 provides a top view picture of a flexible pressure sensor device during manufacturing;
FIGs 7A, 7B, 7C, and 7D schematically illustrate manufacturing methods;
FIG 8 proves a cross-section side view of a flexible pressure sensor device;
FIG 9 provides experimental results;
FIG 10 provide a plan view of a flexible pressure sensor layout manufactured for testing; and
FIGs 11 and 12 provide further experimental results.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

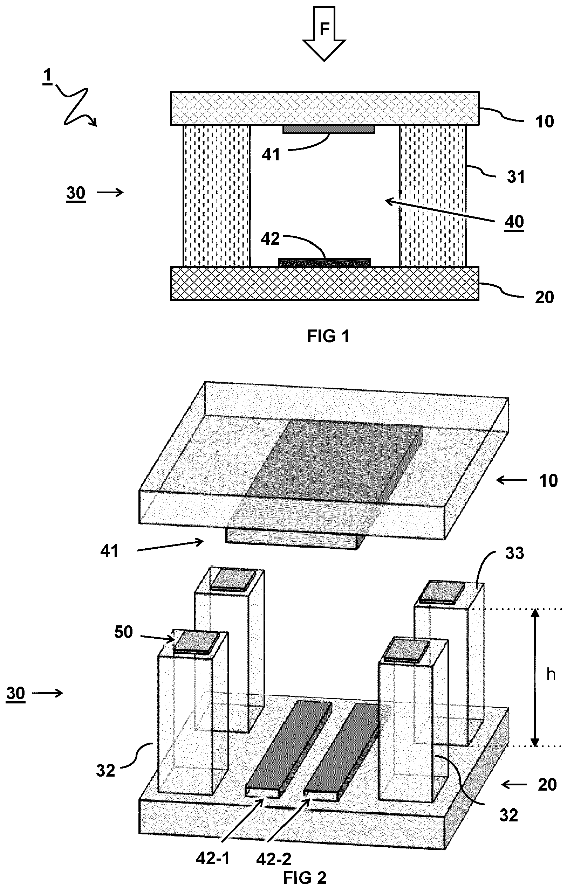

FIG 1 provides partial cross-section side view of a flexible pressure sensor device 1 according to the present disclosure. A shown the device comprises a first flexible substrate 10, a second flexible substrate 20, a spacer structure 30, and a plurality of sensor nodes 40 (only one shown).

The substrates can be foils, polymer based. Preferably, at least one of the substrates is stretchable, most probably by at least 5% or more without losing essential functionality. For example, the substrate can be formed of an elastomeric composition, e.g. an elastomeric foil. For example, a polyurethane based foil, such as thermoplastic polyurethane. Typically the foils are airtight. The foil thickness is preferably in a range of 25-300 micrometers, most preferably in a range of 50 - 200 micrometers. Foils that are too thick can be less desired from a practical or esthetic point of view. Foils that are too thin can be less desirable due to increasingly difficult handling during manufacturing.

The spacer structure comprises a plurality of isolated spacer elements. The spacer elements are distributed between adjacent sensor nodes. The spacer structure separated the substrates at a distance in the absence of an external force. The sensor node 40 comprises a first conductive element 41 attached to the first substrate and a second conductive element 42 that is attached to the second substrate facing the first conductive element, the first conductive element being movable in use in relation to the second conductive element to vary the resistance of the force-sensitive sensor node.

As best seen in FIGs 2-6 spacings (s) between adjacent ones of the spacer elements provide openings forming an interconnected network of pockets connected by gas passages between the sensor nodes.

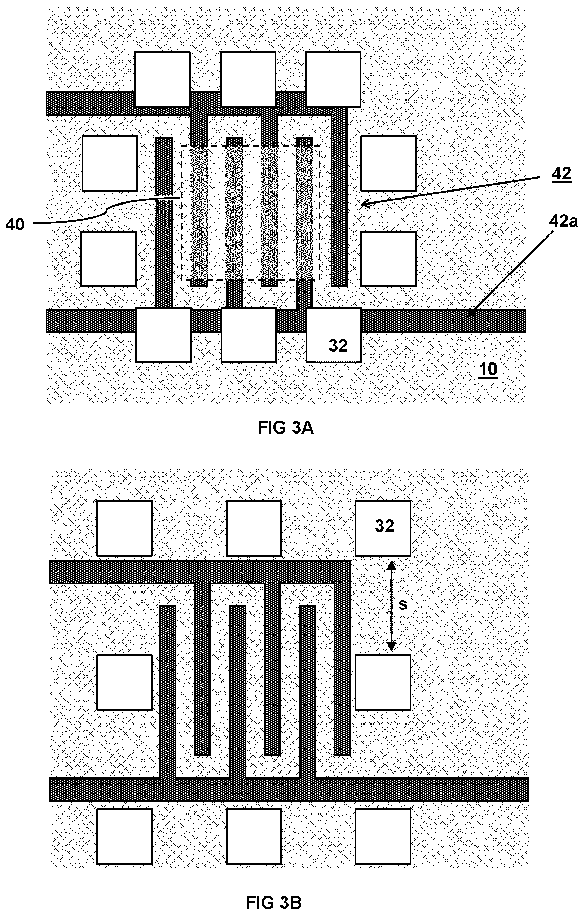

As illustrated in the figures the sensor node 40 can be what is known in the field as a force-sensitive resistor type (FSR) sensor. For these sensors one of the conductive elements typically comprises a pair of electrically conductive leads 42-1,42-2. In preferred variations (see e.g. FIG 3) the leads can be part of an interdigitated finger electrode. The leads can be of any suitably conductive composition, e.g. metal. For example, traces formed by printed conductive ink compositions. The other of the conductive elements typically comprises a layer of a composition having a comparatively high resistance, typically have a resistance in the kOhm to MOhm region, e.g. a FSR layer. Upon inward flexing of one or both of the substrates over a distance of at least an initial separation distance the opposing elements can contact, which results in an observable change in resistance between the leads. Advantageously, the resistance can scale with applied pressure. For example, one or more of: the contact area between the elements, and the specific resistance of the FSR can vary as a function of applied pressure.

Upon release of the pressure the sensor can recover back to an initial state. For details as to FSR based sensor nodes, specifically a composition and/or layout of the substrate(s) and the conductive elements reference is made WO 2020/214037 which is hereby incorporated by reference.

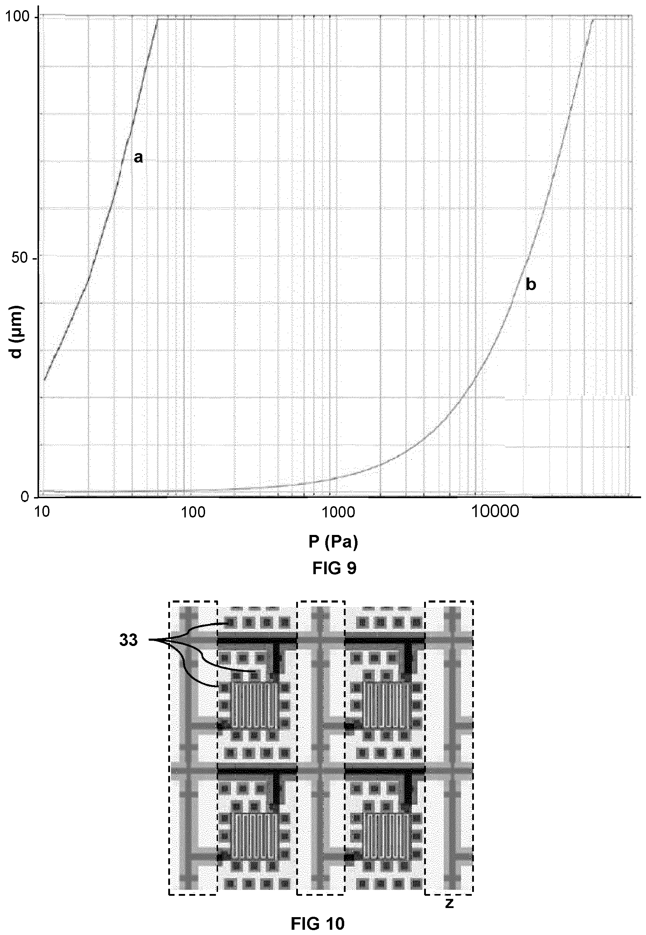

Due to the open nature of the spacer structure (cf WO 2020/214037 having a restricted flow spacer) air between the opposing elements can destitute freely within the device. As compared to known devices having a closed or restricted spacer structure comparative more free air redistribution significantly improves sensor node response. FIG 9 illustrates experimental traces (a,b) for two devices as obtained from modelling. Each of the devices have spacer with a height of 100 pm surrounding a circular sensor node with diameter of 5 mm. The devices differ in the presence/absence of air within the sensor node. Devices having no air within the sensor node (trace a) a maximum vertical displacement (d) of the top substrate (first substrate) with respect to the bottom substrate (second substrate) are essentially not hindered by a build-up of internal pressure. As shown the substrates can contact each other already at a comparatively low external pressure of about 70 Pa as applied centrally, after which the maximum separation remains 100 pm but the contact area increases. In contrast, devices wherein air in the node is restricted from redistribution require a much higher force for initial contact (amounting to an offset of about 11000 Pa).

It will be appreciated associated to the particular spacer configuration as disclosed herein as are not particularly limited to specific shunting type FSR-based configurations as shown herein. devices. The benefits of free air redistribution within the system can be applied to devices having different types of other type sensor nodes or combinations of sensor types as known in the field, for example capacitive sensors. FIGs 3A and 3B provide detail aspects of exemplary pillar configurations. As seen in plain view a plurality of pillar 32 surround a central area of a sensor node 40. As shown the pillars can partly overlap the conductive element 42 (finger electrode) or the wiring 42a connecting to the element. As shown both a spacing and dimensioning of the pillars can vary. The same holds for a composition of the pillars (not visualized).

Likewise it will be appreciated that an exact, number, size, and/or layout of the sensor nodes can depend on an intended application, e.g. a pressure sensing mat, a shoe inlay, a bedding underlayment, etc. In some variations the sensor nodes can be provided in a grid, e.g. a regular mxn grid preferably in combination with a matrix readout, most preferably a passive matrix readout.

In preferred variations the spacer elements can be upstanding pillars, e.g. formed of an elastomeric composition, that extend from one to the first and the second electrometric substrate towards the other of the first and the second electrometric substrate. The pillars can advantageously be provided by common deposition methods such as by screen printing an appropriate comparison on one of the substrates, after which the second substrate can be assembled onto of the pillars.

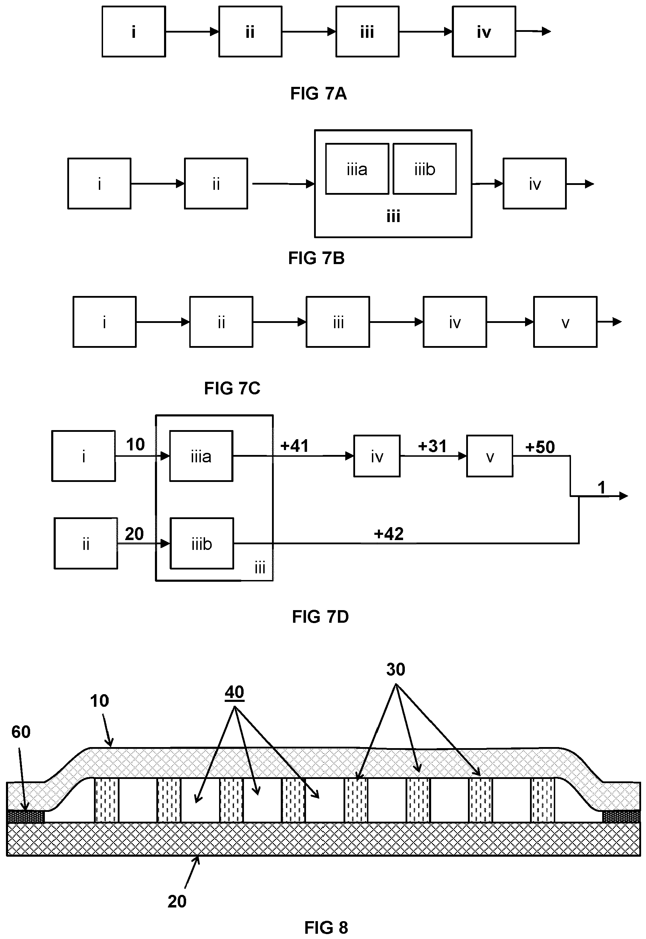

To restrict lateral shifting of the substrates an adhesive can be provided. In a preferred embodiment, e.g. as shown in FIG 2, there can be provided an adhesive layer 50 that is restricted to an endface 33 of the isolated spacer elements or to a subset thereof. As best seen in FIG 8 the first and the second substrate can be connected around a perimeter of the spacer structure by a seal 60 separating a direct fluid contact between interconnected network of gas passages and ambient. The seal can be provided by a glue layer, which can be of the same composition as on the pillars and which can advantageously be provided during a single overprinting step. Alternatively, or in addition, thermo sealing can be used.

As illustrates in FIG 1 a height of the spacer (h) preferably exceed more a combined thickness of: the first conductive element; the second conductive element; and the adhesive layer. Table 1 provides numeric values for elements used in devices as manufactured.

**Table 1: Exemplary material thicknesses**

| Element | Thickness (µm) |
|---|---|
| Top and bottom substrate | 25-200 (e.g. 90 µm TPU) |
| First conductive element (e.g. FSR layer) | 4-10 |
| Adhesive (glue) | 4-10 |
| Spacer | 30-150 |
| Second conductive element (e.g. printed metal traces) | 4-10 |

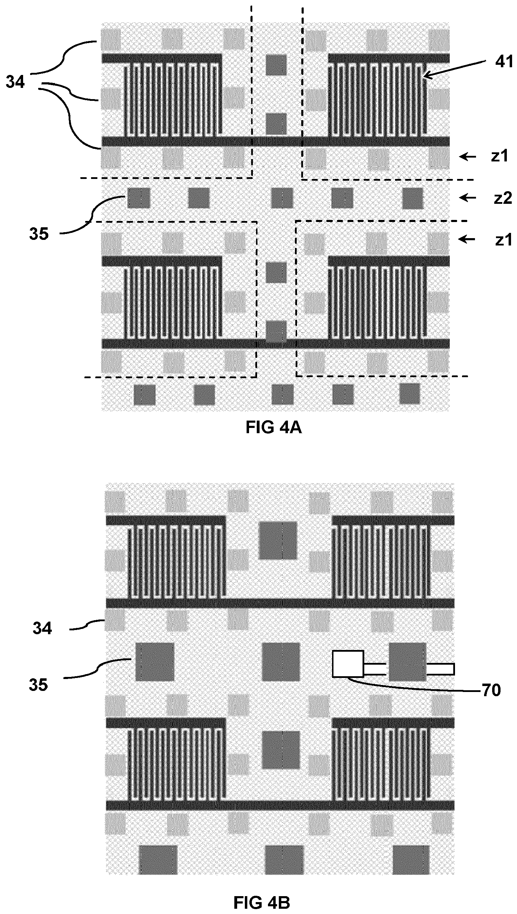

In some variations the plurality of spacer elements can comprise a subset of first upstanding pillars 34 and a subset of second upstanding pillars 35, different from the first. As illustrated in FIG 4A the pillars 34,35 can be distributed in separate zones. For example, a first zone (z1) in direct proximity (e.g. surrounding) the first conductive element 41 and a second, that is comparatively more remote from the sensor nodes 40, e.g. in between adjacent first zones.

As illustrated in FIG 4B the first and second type pillars 34,35, can vary in size, number, and/or spacing. Alternatively, or in addition, the pillars can vary in height and/or composition (not illustrated). In some embodiments, e.g. as shown, further electronic components 70 can be provided in the second zone (z2).

FIGs 7A, 7B, 7C, and 7D schematically illustrate manufacturing methods. As indicated the method comprises
i) providing a first substrate, preferably an elastomeric substrate;
ii) providing a second substrate, preferably an elastomeric substrate;
iii) providing a plurality of force-sensitive sensor nodes; and
iv) providing a spacer structure,
each sensor node comprising a first conductive element attached to first substrate and a second conductive element attached to the second substrate facing the first conductive element, the first conductive element being movable in use in relation to the second conductive element to vary the resistance of the force-sensitive sensor node; and wherein the spacer structure extends between the first and the second substrate and is comprised of plurality of isolated spacer elements distributed between adjacent sensor nodes, and wherein spacings between adjacent ones of the spacer elements provide an interconnected network of cavities for air passage between the sensor nodes.

The step of providing the spacer structure and/or the step of providing the providing a plurality of force-sensitive sensor nodes can comprise printing. For example, as illustrated in FIG 7B, providing a plurality of force-sensitive sensor nodes can comprise substep iiia and iiib of printing (e.g. screen printing) first and the second conductive elements to the respective substrate prior providing the spacer structure. Similarly, the spacer structure can be printed onto one or both of the substrates. As mentioned the pillar can be comprised of an elastomeric composition.

In some embodiments, e.g. as illustrated in FIG 7C, the method further comprises a step of overprinting (v) an adhesive layer onto the spacer structure.

Advantageously the production process is fully compatible with large scale production method. In some embodiments, the production process can be implemented as a roll-to-roll process.

A particular method of manufacturing will be detailed with reference to FIG 7D. At stages i) and ii) a sheet of a suitable substrate 10, 20 is provided, e.g. from separate feed rollers. Foil 10 is processed at a station (e.g. a screen printing station) configured to apply iiia first conductive elements 41 (e.g. FSR). Foils 20 is processed at a station configured to apply the corresponding second conductive element 42 (e.g. interdigitated finger electrodes). The spacer (e.g. pillars) structure is applied to one of the foils (stage iv), followed by stage v) providing, e.g. overprinting v), a glue laver (adhesive 50) onto end faces the in step than (e.g. by screen printing). In a final stage the foils are assembled on top of each other yielding the assembled flexible pressure sensor device.

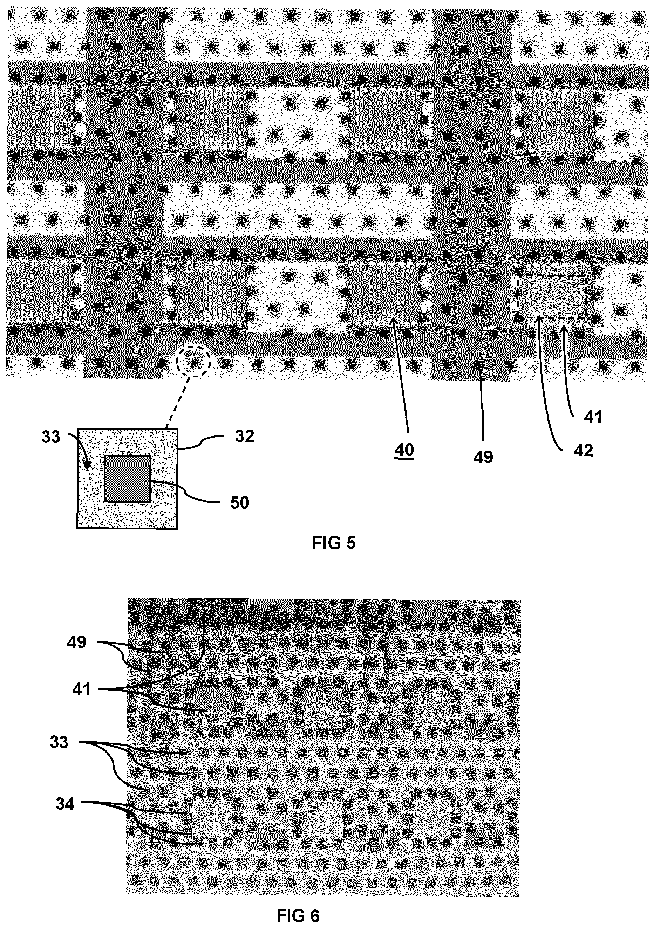

FIG 5 illustrates a first flexible substrate 10 after: printing of the first conductive elements 41 (interdigitated finger electrodes), screen printing of a plurality of isolated upstanding pillars 32. The wiring 49 to the second conductive elements 42 is arranged in a matrix configuration (marked by horizonal and vertical grey bands in the image). As best seen in the detail images (bottom-left) a glue layer 50 is over printed onto endfaces 33 of the pillars. A positioning of the FSR layer 42 (after assembly of the second foil) is indicated by the dashed rectangular box.

FIG 6 displays a picture of substrate with a plurality of wired interdigitated finger electrodes whereby the spacer structure comprises a subset of first pillars 34 spaced around a perimeter of each of the sensor nodes and a subset of second pillars 31 provided at areas between the first pillars. Note the different spacings at the different zones. The substrate can be a bottom substrate of the flexible pressure sensor device, similar as shown in FIG 2.

FIG 10 illustrates a variation which differs from the variation depicted in FIG 6 in primarily in that the pillars are anisotropically distributed. Specifically there exist zones (z, vertical in the figure) where no pillars are provided. Hysteresis evaluation has been done in a dynamic measurement setup. Small (circa A4 size) pressure sensor mats are made with two different pillar designs, as shown in figure 6 and 10. The design in FIG 10 strokes in vertical direction where no pillars are present, where the design in FIG 6 is quite homogeneously covered with pillars. All pillars were also covered with glue. The mat was positioned on a 1 cm thick yoga mat and a bowling ball was rolled over the mat, while reading out the pressure sensors of the mat simultaneously. The mat made with the anisotropic distribution clearly showed more hysteresis when the ball was rolled in horizontal direction (as opposed to vertically). For more homogeneous distrusted designs the response did not vary with a rolling direction of the bowling ball.

The effect of the pillar height has been evaluated for systems with and without airflow. As discussed in relation to FIG 9 it was found that the threshold pressure (defined as the pressure at which the FSR first makes contact with the interdigitated silver fingers, causing a resistance drop of several decades) depends on whether or not the sensor nodes are closed. In addition it was confirmed that, for closed sensor nodes (air filled but no air exchange between adjacent nodes), a threshold can depend on pillar height.

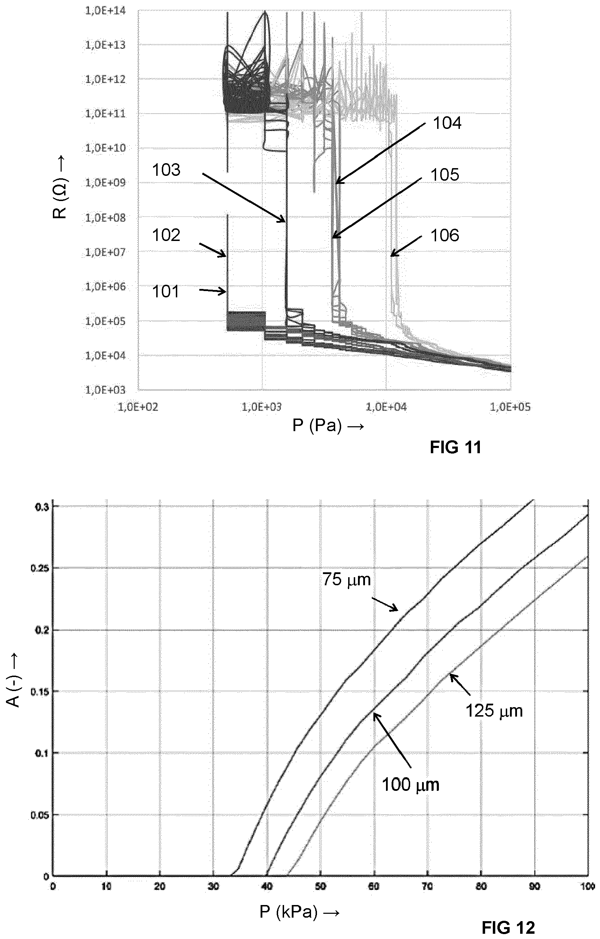

FIG11 depicts response traces of nodes made using PEN foils as a carrier. Traces 101 (red), 102 (blue), 104 (green) and 106 (yellow) use a printed spacer and adhesive. Traces 105 (orange) and 103 (purple) use the same carrier, but a PSA and TPU-based foil as spacer and adhesive.

The nominal thickness of the closed spacers is respectively 11, 23, 50, 60, 60, and 89 µm (in ascending order from 101 to 106).

Additionally, simulations have clearly shown a dependence of threshold pressure on pillar height for sensors without airflow printed on TPU substrates. FIG 12 provides simulated results that illustrates contact area (normalized with respect to device area) vs. applied pressure. The curves are obtained for different spacer thicknesses, for a device radius of 5 mm. The normalized contact area (A) is defined as the surface of FSR printed TPU making contact with the TPU having printed interdigitated fingers. The contact area scales with the current running through the sensor, and thus the resistance of the sensor.

A next step was made with printed pressure sensors on stretchable TPU substrates. Here, the pillars according to the present space concept were used to create airflow in the larger sensor mat. In these samples, dependence of threshold pressure on pillar height was not observed experimentally.

For the purpose of clarity and a concise description, features are described herein as part of the same or separate embodiments, however, it will be appreciated that the scope of the invention may include embodiments having combinations of all or some of the features described.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A pressure sensor device (1) comprising
a first substrate (10),
a second substrate (20),
a spacer structure (30) extending between the first and the second substrate, and
a plurality of force-sensitive sensor nodes,
each sensor node (40) comprising a first conductive element (41) attached to first substrate and a second conductive element (42) attached to the second substrate facing the first conductive element, the first conductive element being movable in use in relation to the second conductive element to vary the resistance of the force-sensitive sensor node,
wherein the spacer structure (30) comprises a plurality of isolated spacer elements (31) distributed between adjacent sensor nodes, and wherein spacings between adjacent ones of the spacer elements provide an interconnected network of gas passages between the sensor nodes.

2. The device according to claim 1, wherein spacer element is an upstanding pillar (32) formed of an elastomeric composition.

3. The device according to claim 1 or 2, further comprising an adhesive layer (50) restricted to an endface (33) of the isolated spacer elements or to a subset thereof.

4. The device according to any of the preceding claims, wherein the plurality of spacer elements comprises
a subset of first upstanding pillars (34) distributed in a first zone (z 1) surrounding a perimeter of the sensor node (40), and
a subset of second upstanding pillars (35), different from the first, distributed in a second zone (z2) adjacent the first zone.

5. The device according to claim 4, wherein the pressure sensor device has a comparatively higher structural rigidity at areas corresponding to the second zone (z2) than at areas the correspond to the first zone (z1).

6. The device according to claim 4 or 5, further comprising one or more further sensor node (60) that are disposed in the second zone.

7. The device according to any of the preceding claims, wherein a height of the spacer elements is more than a combined thickness of: the first conductive element; the second conductive element; and the adhesive layer.

8. The device according to any of the preceding claims, wherein the first and the second substrate are connected around a perimeter of the spacer structure thereby sealing the interconnected network of gas passages from ambient.

9. A method (200) of manufacturing a pressure sensor device, the method comprising
i) providing a first substrate;
ii) providing a second substrate;
iii) providing a plurality of force-sensitive sensor nodes;
each sensor node comprising a first conductive element attached to first substrate and a second conductive element attached to the second substrate facing the first conductive element, the first conductive element being movable in use in relation to the second conductive element to vary the resistance of the force-sensitive sensor node; and
iv) providing a spacer structure
wherein the spacer structure extends between the first and the second substrate and is comprised of plurality of isolated spacer elements distributed between adjacent sensor nodes, and wherein spacings between adjacent ones of the spacer elements provide an interconnected network of cavities for air passage between the sensor nodes.

10. The method according to claim 9, wherein the step of providing the spacer structure comprises printing.

11. The method according to claim 9 or 10, wherein the step of providing a plurality of force-sensitive sensor nodes comprises printing of the first and the second conductive element to the respective substrate prior providing the spacer structure.

12. The method according to any of claims 9-11, further comprising a step of overprinting (v) an adhesive layer onto the spacer structure, wherein the adhesive is restricted to endfaces of the isolated spacer elements or to a subset thereof.

13. The method according to any of claims 9-12, wherein the step of providing the spacer structure comprises substeps of
printing a set of first of pillar elements distributed in a first zone surrounding a perimeter of the sensor node, and
printing a set of second pillar elements, different from the first, distributed in a second zone adjacent the first zone.

14. The method according to any of claims 9-13, further comprising interconnecting the first and the second substrate around a perimeter of the spacer structure thereby sealing the interconnected network of gas passages from ambient.
